# EUROPÄISCHE PATENTSCHRIFT

(11) **EP 1 254 800 B1**
(45) Veröffentlichungstag und Bekanntmachung des Hinweises auf die Patenterteilung: **17.01.2007**
(21) Anmeldenummer: 02006251.9
(22) Anmeldetag: 20.03.2002
(51) Int. Cl.: B60J 7/053

(54) **Dachanordnung für ein Fahrzeug**
Roof assembly for vehicle
Ensemble de toit pour vehicule

(30) Priorität: 05.05.2001 DE 10121888
(43) Veröffentlichungstag der Anmeldung: 06.11.2002
(73) Patentinhaber: Dr.Ing. h.c.F. Porsche Aktiengesellschaft, 70435 Stuttgart (DE)
(72) Erfinder: Armbruster, Reiner, 75417 Mühlacker (DE)

(56) Entgegenhaltungen:
- EP-A- 0 403 734
- EP-A- 0 899 140
- DE-A- 4 335 653
- DE-C- 4 336 222

## Beschreibung

Die Erfindung bezieht sich auf eine Dachanordnung für ein Fahrzeug, insbesondere einen Personenkraftwagen, gemäß Oberbegriff des Anspruchs 1.

Aus der DE 43 35 653 A1 ist eine gattungsgemäße Dachanordnung für einen Personenkraftwagen bekannt. Die Dachanordnung besitzt einen Dachrahmen und einen Schiebedeckel, der in zwei seitlichen Führungsbahnen verfahrbar geführt ist und der zum Verschließen oder Freigeben einer Dachöffnung in dem Fahrzeug dient. An dem Schiebedeckel sind mehrere Lagereinrichtungen angelenkt, von denen jede über jeweils ein Führungselement in einer der Führungsbahnen abgestützt ist. Zumindest zwei der Lagereinrichtungen weisen jeweils eine Hebelanordnung auf, die an dem Führungselement und am Schiebedeckel in jeweils einem Drehlager befestigt ist. Soll die Dachöffnung freigegeben werden, wird der Schiebedeckel über die Hebelanordnung um eine parallel zur Fahrzeugquerachse verlaufende Kippachse gekippt bzw. abgesenkt und anschließend entgegen der Fahrtrichtung unter ein feststehendes Dachteil verschoben.

Die DE 199 38 605 C1 beschreibt eine Lagereinrichtung für einen Schiebedeckel, die ein in einer Führungsbahn bewegliches Führungselement besitzt. Ein Bolzen greift in eine Bolzenaufnahme des Deckels ein, wobei der Bolzen über eine vorgespannte Schraubenfeder gegenüber dem starren Deckel abgestützt ist. Nachteilig bei dieser Ausgestaltung ist, dass in der Bolzenaufnahme und an dem Bolzen jeweils eine ringförmige Abstützfläche für die Schraubenfeder herzustellen ist, was die Herstellungskosten der Dachanordnung verteuert.

Es ist daher Aufgabe der Erfindung, eine Dachanordnung der eingangs genannten Art zu schaffen, bei der während der Fahrt des Fahrzeugs Klappergeräusche insbesondere bei geöffnetem Schiebedeckel zumindest vermindert werden.

Gelöst wird diese Aufgabe mit einer Dachanordnung, die die in Anspruch 1 genannten Merkmale zeigt. Weitere, die Erfindung vorteilhaft ausgestaltende Merkmale sind in den Unteransprüchen angegeben.

Die mit der Erfindung hauptsächlich erzielten Vorteile sind darin zu sehen, dass störende Geräusche, beispielsweise Klappern, zumindest vermindert werden. Hierfür eignet sich auf vorteilhafter Weise das gummielastische Element, das bei der Montage der Dachanordnung eingesetzt wird. Darüber hinaus entfallen Kosten verursachende weitere Bearbeitungen der Lagereinrichtung bzw. des Schiebedeckels.

Die Erfindung wird nachfolgend anhand von Ausführungsbeispielen mit Bezug auf die Zeichnung näher erläutert.

Es zeigen
Fig. 1 ein Personenkraftwagen mit einer Dachanordnung und
Fig. 2 die Dachanordnung in Schnittdarstellung entlang der Linie II-II in Fig. 1.

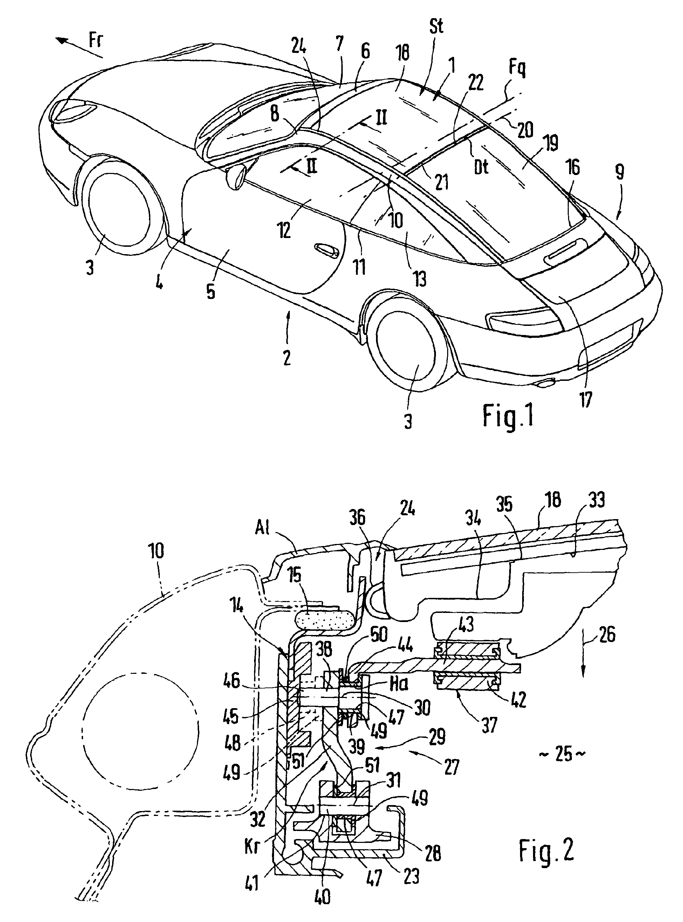

Anhand der Figuren 1 und 2 wird eine Dachanordnung 1 beschrieben, die an einem Fahrzeug, insbesondere Personenkraftwagen 2, vorgesehen ist, der einen von Rädern 3 getragenen Aufbau 4 umfasst. Der Aufbau 4 weist einen Grundkörper 5 und einen Windschutzscheibenrahmen 6 auf, in den eine Windschutzscheibe 7 eingesetzt ist. Von den oberen Ecken 8 des Windschutzscheibenrahmens 6 erstrecken sich in Richtung des Hecks 9 seitliche Dachlängsholme 10 des Aufbaus 4, die etwa bogenförmig verlaufen, so dass der Aufbau 4 die Form eines Coupes mit Fließheck besitzt. Zwischen den seitlichen Dachlängsholmen 10 und einer darunter liegenden Gürtellinie 11 des Aufbaus 4 sind Seitenscheiben 12 und 13 eingesetzt.

Die Dachanordnung 1 ist zwischen den seitlichen Dachlängsholmen 10 angeordnet und besitzt - gemäß Fig. 2 - einen Dachrahmen 14, der, beispielsweise durch eine umlaufende Verklebung 15, mit dem Aufbau 4 verbunden ist. Der Dachrahmen 14 ist vorzugsweise umflaufend ausgebildet und erstreckt sich vom Windschutzscheibenrahmen 6 bis zu einem vorderen Randbereich 16 vor einer Motorraumzugangsklappe 17. Denkbar wäre es allerdings auch, dass die Dachlängsholme 10 den Dachrahmen bilden.

Die Dachanordnung 1 weist wenigstens einen - in Fahrtrichtung Fr gesehen - vorderen, verlagerbaren Schiebedeckel 18 auf, der starr ausgebildet sein kann und der - in Schließstellung St (Fig. 1) - an den Windschutzscheibenrahmen 6 und einen hinteren Dachteil 19 angrenzt, der vorzugsweise unverschiebbar am Aufbau 4 bzw. am Dachrahmen 14 befestigt ist. Der hintere Dachteil 19 der Dachanordnung 1 ist in bevorzugter Ausführungsform die Heckscheibe des Fahrzeugs. Es kann vorgesehen sein, dass der hintere Dachteil 19 um eine parallel zur Fahrzeugquerachse Fq verlaufende Klappachse 20 geöffnet werden kann. Vorzugsweise ist zwischen der hinteren Kante 21 des Schiebedeckels 18 und der vorderen Kante 22 des hinteren Dachteils 19 lediglich eine Dichtung Dt vorgesehen.

Der - vorzugsweise durchsichtige - Schiebedeckel 18 ist in seitlichen Führungsbahnen 23, die am Dachrahmen 14 oder an den Längsholmen 10 angebracht sein können, zum Verschließen oder zumindest teilweise Freigeben einer Dachöffnung 24 verfahrbar geführt derart, dass er unter dem hinteren Dachteil 19 abgelegt werden kann. Hierfür ist vorgesehen, den Schiebedeckel 18 zunächst in Richtung des Fahrzeuginnenraums 25 in Pfeilrichtung 26 abzusenken und anschließend nach hinten unter den Dachteil 19 zu verschieben. Für das Absenken in Pfeilrichtung 26 ist der Schiebedeckel 18 über mehrere eine Schwenkbewegung des Deckels 18 ermöglichende Lagereinrichtungen 27 in den Führungsbahnen 23 abgestützt. Vorzugsweise sind in jeder Führungsbahn 23 zwei - in Fahrtrichtung Fr hintereinander angeordnete - Lagereinrichtungen 27 gleitend geführt. Jede Lagereinrichtung 27 ist einerseits am Schiebedeckel 18 und andererseits über ein Führungselement 28 in einer der Führungsbahnen 23 abgestützt. Jede Lagereinrichtung 27 besitzt eine Hebelanordnung 29, die sowohl am Führungselement 28 als auch am Schiebedeckel 18 in einem Schwenk- bzw. Drehlager 30 bzw. 31 drehbar angelenkt ist. Die Hebelanordnung 32 umfasst zumindest einen in den Drehlagern 30 und 31 schwenkbar gelagerten Hebel 32, der eine Kröpfung Kr aufweisen kann. Durch die Hebelanordnung 29 kann der Schiebedeckel 28 in Pfeilrichtung 26 abgesenkt werden. Entlang den Führungsbahnen kann er dann nach hinten unter den Dachteil 19 gefahren werden.

Der Schiebedeckel 18 weist an seiner dem Fahrzeuginnenraum 25 zugewandten Seite 33 einen Stützrahmen 34 auf, der an der Deckelinnenseite 33 befestigt ist. Der Stützrahmen 34 ist im Deckelrandbereich 35 vorgesehen und läuft in diesem Deckelrandbereich 35 vorzugsweise vollständig um. An dem Stützrahmen 34 kann eine um den Rand des Deckels 18 umlaufende Dichtung 36 angebracht sein, die den Schiebedeckel 18 zur Begrenzung der Dachöffnung 24 hin abdichtet. Die Dichtung Dt kann Bestandteil der Dichtung 36 sein. Eine Abdeckleiste AI kann den freien Raum zwischen Dachlängsholm 10 und Deckel 18 über der Dichtung 36 überspannen.

Die Lagereinrichtung 27 besitzt einen Lagerblock 37, der an dem Stützrahmen 34 befestigt oder einstückig mit diesem ausgebildet ist. Die Hebelanordnung 29 ist mit einer ersten Lagerachse 38 des oberen Drehlagers 30 in einem Lagerauge 39 des Lagerblocks 37 drehbeweglich befestigt. Die Hebelanordnung 29 ist außerdem mit einer zweiten Lagerachse 40 in einem Lagerauge 41 des unteren Drehlagers 31 drehbeweglich befestigt. Die Lagerachsen 38 und 40 verlaufen parallel zur Fahrzeugquerachse Fq. Die Hebelanordnung 29 ist mithin sowohl mit dem Schiebedeckel 18 als auch dem Führungselement 28 schwenkbeweglich verbunden. Der Lagerblock 37 besitzt vorzugsweise eine Lagerkonsole 42, die mit dem Stützrahmen 34 verbunden ist. In die Lagerkonsole 42 ist ein Ausstellarm 43 eingesteckt und darin befestigt, der sich in Richtung des Dachrahmens 14 erstreckt und an seinem freien nach unten abgewinkelten Ende 44 das Lagerauge 39 aufweist.

Für die Steuerung der Bewegung in Pfeilrichtung 26 des Schiebedeckels 18 ist eine seitlich am Dachrahmen 14 angeordnete Steuerbahn 45 vorgesehen, in die ein Steuerbolzen 46 eingreift. Vorzugsweise sind der Steuerbolzen 46 und die erste Lagerachse 38 einstückig als durchgehender Bolzen ausgebildet, der die Hebelanordnung 29 durchsetzt und mit seinem einen Ende in der Steuerbahn 45 geführt und in dem Lagerauge 39, vorzugsweise durch Zwischenschalten einer Lagerhülse, insbesondere Gleithülse 47, drehbeweglich gehalten ist. In das Lagerauge 41 kann ebenfalls eine Lagerhülse, insbesondere Gleithülse 47, eingesetzt sein. Ferner kann eine weitere Lagerhülse, vorzugsweise Gleithülse 48 (in Fig. 2 gestrichelt dargestellt), auf dem in der Steuerbahn 45 geführten Ende des Steuerbolzens 46 angeordnet sein. Die Gleithülsen 47 und 48 aus einem Gleitlagerwerkstoff weisen außer dem Hülsenabschnitt Ha noch einen Ringkragen 49 auf.

Um insbesondere bei freigegebener Dachöffnung 24 Klappergeräusche, insbesondere der Lagereinrichtung 27 und/oder der Hebelanordnung 29, zu vermeiden oder zumindest zu verringern, ist die Hebelanordnung 29 in zumindest einem ihrer Drehlager 30 bzw. 31 gegen das Führungselement 28 bzw. den Schiebedeckel 18 mit einem elastischen Element 50 abgestützt. Das elastische Element ist aus einem gummielastischen Werkstoff hergestellt. Vorzugsweise ist das elastische Element 50 auf die erste und/oder zweite Lagerachse 38 bzw. 40 aufgesteckt und liegt zwischen dem Hebel 32 und dem entsprechenden Lagerauge 39 bzw. 41 des Lagerblocks 37 bzw. Führungselements 28.

Das elastische Element 50 ist vorzugsweise als Ring, insbesondere O-Ring oder Ringscheibe, ausgeführt und kann auf der Lagerachse 38 bzw. 40 oder dem Hülsenabschnitt Ha der Gleithülse 47 bzw. 48 angeordnet sein. Damit das gummielastische Element 50 bei einer Relativbewegung zwischen Hebel 32 und Ausstellarm 43 nicht beschädigt wird, ist vorzugsweise eine Lagerscheibe, insbesondere Gleitlagerscheibe 51, vorgesehen, die zwischen dem Element 50 und dem Hebel 32 bzw. dem Lagerauge 39 angeordnet ist. Zusätzlich oder alternativ zu dem zwischen dem Hebel 32 und dem Ausstellarm 43 angeordneten Element 50 könnte auch zwischen dem Ringkragen 49 und dem Hebel 32 ein derartiges Element 50 angeordnet werden. Denkbar wäre es auch, das Element 50 auf die Lagerachse 40 zu stecken.

## Patentansprüche

1. Dachanordnung für ein Fahrzeug, insbesondere einen Personenkraftwagen, mit einem Dachrahmen, einem Schiebedeckel (18), zwei seitlichen Führungsbahnen (23), in denen der Schiebedeckel zum Verschließen oder zumindest teilweise Freigeben einer Dachöffnung verfahrbar geführt ist, welcher Schiebedeckel (18) mit mehreren Lagereinrichtungen zusammenwirkt, von denen jede Lagereinrichtung einerseits am Schiebedeckel angelenkt und andererseits über ein Führungselement (28) in einer der Führungsbahn (23) abgestützt ist, wobei die Lagereinrichtungen jeweils eine Hebelanordnung (29) aufweisen, die sowohl an dem Führungselement (28) als auch am Schiebedeckel in einem Drehlager befestigt ist, **dadurch gekennzeichnet, dass** die Hebelanordnung (29) an ihrem Drehlager (30, 31) gegen das Führungselement (28) und/oder den Schiebedeckel (18) mit einem elastischen Element (50) aus einem gummielastischen Werkstoff abgestützt ist.

2. Dachanordnung nach Anspruch 1, **dadurch gekennzeichnet, dass** der Schiebedeckel (18) an seiner dem Fahrzeuginnenraum (25) zugewandten Seite (33) einen, vorzugsweise vollständig umlaufenden, am Deckelrandbereich (35) befestigten Stützrahmen (34) umfasst.

3. Dachanordnung nach einem der vorhergehenden Ansprüche, **dadurch gekennzeichnet, dass** die Lagereinrichtung (27) einen Lagerblock (37) besitzt, der an dem Stützrahmen (34) befestigt ist oder einstückig mit dem Stützrahmen (34) ausgebildet ist, und dass die Hebelanordnung (29) mit einer ersten Lagerachse (38) in einem Lagerauge (39) des Lagerblocks (37) und mit einer zweiten Lagerachse (40) in einem Lagerauge (41) des Führungselements (28) drehbeweglich befestigt ist.

4. Dachanordnung nach einem der vorhergehenden Ansprüche, **dadurch gekennzeichnet, dass** das elastische Element (50) auf der ersten und/oder zweiten Lagerachse (38, 40) angeordnet ist und zwischen der Hebelanordnung (29) und dem Lagerblock (37) bzw. Führungselement (28) liegt.

5. Dachanordnung nach einem der vorhergehenden Ansprüche, **dadurch gekennzeichnet, dass** die erste Lagerachse (38) die Hebelanordnung (29) durchgreift und mit ihrem vom Lagerblock (37) abgewandten Ende in eine die Schiebedeckelbewegung steuernde Steuerbahn (45) eingreift.

6. Dachanordnung nach einem der vorhergehenden Ansprüche, **dadurch gekennzeichnet, dass** der Lagerblock (37) eine Lagerkonsole (42) und einen Ausstellarm (43) besitzt, der sich von der Lagerkonsole (42) in Richtung des Dachrahmens (14) erstreckt und der an seinem dem Dachrahmen (14) benachbart liegenden Ende (44) das Lagerauge (39) für die Aufnahme der ersten Lagerachse (40) besitzt.

7. Dachanordnung nach einem der vorhergehenden Ansprüche, **dadurch gekennzeichnet, dass** in das Lagerauge (39, 41) für die erste und/oder zweite Lagerachse (38, 40) eine die Lagerachse (38, 40) umgebende Lagerhülse, insbesondere Gleitlagerhülse (47, 48), eingesetzt ist.

8. Dachanordnung nach einem der vorhergehenden Ansprüche, **dadurch gekennzeichnet, dass** auf der ersten und/oder zweiten Lagerachse (38, 40) eine Lagerscheibe, insbesondere Gleitlagerscheibe (51), angeordnet ist.

9. Dachanordnung nach einem der vorhergehenden Ansprüche, **dadurch gekennzeichnet, dass** die Lagerscheibe (51) und das elastische Element (50) nebeneinander liegend auf der Lagerachse (38, 40) und zwischen der Hebelanordnung (29) und dem Lagerauge (39, 41) angeordnet ist.

10. Dachanordnung nach einem der vorhergehenden Ansprüche, **dadurch gekennzeichnet, dass** das elastische Element als Ring, insbesondere 0-Ring, ausgebildet ist.

## Claims

1. A roof assembly for a vehicle, in particular a passenger car, with a roof frame, a sliding cover (18), two lateral guide paths (23) in which the sliding cover is guided in a displaceable manner in order to close or at least partially free a roof opening, which sliding cover (18) co-operates with a plurality of mounting devices, each mounting device of which is articulated to the sliding cover on the one hand and is supported in one of the guide paths (23) by way of a guide element (28) on the other hand, wherein the mounting devices have in each case a lever arrangement (29) which is fastened both to the guide element (28) and to the sliding cover in a pivot bearing, **characterized in that** the lever arrangement (29) is supported by a resilient element (50) of a rubber-resilient material on its pivot bearing (30, 31) against the guide element (28) and/or the sliding cover (18).

2. A roof assembly according to Claim 1, **characterized in that** on its side (33) facing the interior (25) of the vehicle the sliding cover (18) comprises a support frame (34) which is preferably completely continuous and which is fastened to the edge region (35) of the cover.

3. A roof assembly according to one of the preceding Claims, **characterized in that** the bearing device (27) comprises a bearing block (37) which is fastened to the support frame (34) or is constructed in one piece with the support frame (34), and the lever arrangement (29) is fastened in a rotatable manner with a first bearing axle (38) in a bearing eyelet (39) in the bearing block (37) and with a second bearing axle (40) in a bearing eyelet (41) in the guide element (28).

4. A roof assembly according to any one of the preceding Claims, **characterized in that** the resilient element (50) is arranged on the first and/or second bearing axle (38, 40) and is situated between the lever arrangement (29) and the bearing block (37) or the guide element (28) respectively.

5. A roof assembly according to any one of the preceding Claims, **characterized in that** the first bearing axle (38) engages through the lever arrangement (29) and engages with its end facing away from the bearing block (37) in a control path (45) which controls the movement of the sliding cover.

6. A roof assembly according to any one of the preceding Claims, **characterized in that** the bearing block (37) has a bearing bracket (42) and a push-out arm (43) which extends from the bearing bracket (42) in the direction of the roof frame (14) and which has the bearing eyelet (39) for receiving the first bearing axle (40) [*sic - recte* (38)] at its end (44) situated adjacent to the roof frame (14).

7. A roof assembly according to any one of the preceding Claims, **characterized in that** a bearing sleeve, in particular a slide-bearing sleeve (47, 48), surrounding the first and/or second bearing axle (38, 40) is inserted in the bearing eyelet (39, 41) for the bearing axle (38, 40).

8. A roof assembly according to any one of the preceding Claims, **characterized in that** a bearing disc, in particular a slide-bearing disc (51), is arranged on the first and/or second bearing axle (38, 40).

9. A roof assembly according to any one of the preceding Claims, **characterized in that** the bearing disc (51) and the resilient element (50) are arranged resting adjacent to each other on the bearing axle (38, 40) and between the lever arrangement (29) and the bearing eyelet (39, 41).

10. A roof assembly according to any one of the preceding Claims, **characterized in that** the resilient element is constructed in the form of a ring, in particular an O-ring.

## Revendications

1. Structure de toit pour un véhicule, notamment pour une voiture particulière, avec un cadre de toit, un panneau coulissant (18), deux glissières de guidage (23) latérales dans lesquelles le panneau coulissant est guidé de façon déplaçable pour la fermeture ou pour la libération au moins partielle d'une ouverture dans le toit, lequel panneau coulissant (18) est en interaction avec plusieurs dispositifs de paliers, dont chaque dispositif de palier est articulé d'une part sur le panneau coulissant et est appuyé d'autre part dans l'une des glissières de guidage (23), par l'intermédiaire d'un élément de guidage (28), les dispositifs de palier comportant chacun un agencement de leviers (29), qui est fixé dans un palier rotatif, aussi bien sur l'élément de guidage (28) que sur le panneau coulissant, **caractérisée en ce que** l'agencement de leviers (29) est appuyé par son palier rotatif (30, 31) contre l'élément de guidage 28)( et/ou contre le panneau coulissant (18) avec un élément (50) en un matériau en caoutchouc élastique.

2. Structure de toit selon la revendication 1, **caractérisée en ce que** le panneau coulissant (18) comprend sur son côté (33) dirigé vers l'habitacle du véhicule (25) un cadre d'appui (34) fixé sur la zone de bordure de panneau (35).

3. Structure de toit selon l'une quelconque des revendications précédentes, **caractérisée en ce que** le dispositif de paliers (27) comporte un bloc de paliers (37), qui est fixé sur le cadre d'appui (34) ou qui est conçu en monobloc avec le cadre d'appui (34) et **en ce que** l'agencement de leviers (29) est fixé de façon mobile en rotation avec un premier axe de palier (38) dans un oeillet de palier (39) du bloc de paliers (37) et avec un deuxième axe de palier (40) dans un oeillet de palier (41) de l'élément de guidage (28).

4. Structure de toit selon l'une quelconque des revendications précédentes, **caractérisé en ce que** l'élément élastique (50) est disposé sur le premier et/ou sur le deuxième axe de palier (38, 40) et se situe entre l'agencement de leviers (29) et le bloc de paliers (37) ou l'élément de guidage (28).

5. Structure de toit selon l'une quelconque des revendications précédentes, **caractérisé en ce que** le premier axe de palier (38) traverse l'agencement de leviers (29) et avec son extrémité opposée au bloc de paliers (37) s'engage dans une glissière de manoeuvre (45) commandant le déplacement du panneau coulissant.

6. Structure de toit selon l'une quelconque des revendications précédentes, **caractérisée en ce que** le bloc de paliers (37) comporte un console de palier (42) et un bras de sortie (43), qui s'étend de la console de palier (42) en direction du cadre de toit (14) et qui sur son extrémité (44) voisine du cadre de toit (14) comporte l'oeillet de palier (39) pour réceptionner le premier axe de palier (40).

7. Structure de toit selon l'une quelconque des revendications précédentes, **caractérisée en ce que** dans l'oeillet de palier (39, 41) pour le premier et/ou pour le deuxième axe de palier (38, 40) est insérée une douille de palier entourant l'axe de palier (38, 40), notamment une douille coulissante (47, 48).

8. Structure de toit selon l'une quelconque des revendications précédentes, **caractérisée en ce qu'**une rondelle de palier, notamment une rondelle de palier lisse (51) est disposée sur le premier et/ou sur le deuxième axe de palier (38, 40).

9. Agencement de toit selon l'une quelconque des revendications précédentes, **caractérisé en ce que** la rondelle de palier lisse (51) et l'élément élastique (50) sont disposés côte à côte sur l'axe de palier (38, 40) et entre l'agencement de leviers (29) et l'oeillet de palier (39, 41).

10. Agencement de toit selon l'une quelconque des revendications précédentes, **caractérisé en ce que** l'élément élastique est conçu sous la forme d'une bague, notamment d'un joint torique.
